# DEMANDE DE BREVET EUROPEEN

(11) **EP 4 105 300 A1**
(43) Date de publication de la demande: **21.12.2022**
(21) Numéro de dépôt: 22178244.4
(22) Date de dépôt: 09.06.2022
(51) Int. Cl.: C10G 47/00

(54) **PROCÉDÉ D HYDROCRAQUAGE**

(30) Priorité: 17.06.2021 FR 2106409
(71) Demandeur: Axens, 92500 Rueil Malmaison (FR)
(72) Inventeur: BONNARDOT, Jérome, 92500 RUEIL-MALMAISON (FR); DULOT, Hugues, 92500 RUEIL-MALMAISON (FR); PAILLIER, Alexis, 92500 RUEIL-MALMAISON (FR); PIGOURIER, Jérôme, 92500 RUEIL-MALMAISON (FR); PUPAT, Nicolas, 92500 RUEIL-MALMAISON (FR)
(74) Mandataire: IFP Energies nouvelles

(57) **Abrégé**

L'invention concerne un procédé d'hydrocraquage d'une charge pétrolière (1) comprenant :
- (a) une étape d'hydrocraquage de la charge afin d'obtenir un effluent hydrocraqué;
- (b) une étape de séparation liquide/gaz de l'effluent pour obtenir un effluent gazeux (5) et un effluent liquide (9) ;
- (c) une étape de fractionnement dudit effluent liquide (9) à une pression P1, produisant un premier distillat (13,14) et un premier résidu (15),
- (d) une étape de recyclage d'une première partie (18) dudit premier résidu (15) vers l'étape d'hydrocraquage et/ou au moins une des étapes d'hydrocraquage,
- (e) une étape de rectification d'une deuxième partie (20) du premier résidu (15) à une pression P2 inférieure ou égale à la pression P1, pour obtenir un distillat secondaire (23), un résidu secondaire (16) et un flux vapeur (22),
- (f) une étape de purge d'une partie du résidu secondaire (16),
- (g) une étape de recyclage de tout ou partie dudit distillat secondaire (23) vers l'étape d'hydrocraquage ou vers au moins une des étapes d'hydrocraquage.

## Description

### Domaine technique

L'invention concerne un procédé d'hydrocraquage d'une charge pétrolière. On rappelle que l'hydrocraquage (aussi désigné sous le terme d'hydroconversion) de coupes pétrolières lourdes est un procédé clé du raffinage qui permet de produire, à partir de charges lourdes excédentaires et peu valorisables, les fractions plus légères telles qu'essences, carburéacteurs et gazoles légers que recherche le raffineur pour adapter sa production à la demande. Certains procédés d'hydrocraquage permettent d'obtenir également un résidu fortement purifié pouvant constituer d'excellentes bases pour huiles.

### Technique antérieure

Les procédés d'hydrocraquage sont couramment utilisés en raffinerie pour transformer des mélanges hydrocarbonés en produits aisément valorisables. Ils sont toutefois habituellement plutôt utilisés pour convertir des charges plus lourdes (telles que des coupes pétrolières ou synthétiques lourdes, par exemple des gasoils issus de distillation sous vide ou des effluents d'une unité Fischer-Tropsch) en essence ou naphta, kérosène, gasoil. Ce type de procédé est également utilisé pour produire des huiles ou pour transformer des coupes légères telles que, par exemple, des essences en coupes plus légères Gaz de Pétrole Liquéfié (acronyme GPL ou LPG pour Liquefied Petroleum Gas selon la terminologie anglo-saxonne).

Afin d'augmenter la conversion des charges traitées dans des unités d'hydrocraquage, une partie de la charge non convertie peut être recyclée, par exemple, dans la section réactionnelle dans laquelle elle est déjà passée ou dans une section réactionnelle indépendante. Ceci induit une accumulation indésirable des composés aromatiques polycycliques, formés dans la section réactionnelle durant les réactions de craquage, dans la boucle de recyclage. Ces composés empoisonnent le catalyseur d'hydrocraquage, ce qui réduit l'activité catalytique du catalyseur en question, ainsi que la durée de cycle de production de l'unité. Ces composés peuvent également précipiter ou se déposer dans les parties froides de l'unité, générant ainsi des dysfonctionnements.

Ces composés aromatiques polycycliques ou polynucléaires comprennent donc plusieurs noyaux ou cycles benzéniques condensés. On les nomme habituellement HPNA, qui est l'acronyme correspondant au terme anglo-saxon « Heavy Polynuclear Aromatics selon la terminologie anglo-saxonne.

Typiquement, les HPNA dits lourds comprennent au moins quatre, voire au moins six cycles benzéniques dans chaque molécule. Les composés à moins de six cycles (dérivés du pyrène par exemple) peuvent être plus facilement hydrogénés, et sont donc moins susceptibles d'empoisonner des catalyseurs. En conséquence, l'invention s'intéresse plus particulièrement aux composés les plus représentatifs des familles à six cycles aromatiques ou plus, comme par exemple le coronène (composé à 24 carbones), le dibenzo(e,ghi) pérylène (26 carbones), le naphto[8,2,1 ,abc] coronène (30 carbones) et l'ovalène (32 carbones), qui sont les composés les plus facilement identifiables et quantifiables, par exemple par chromatographie.

Le brevet EP3237577 propose une première solution pour traiter les HPNA, en les concentrant dans les fractions non converties afin de les éliminer et de réduire la quantité de résidu purgé pour augmenter la conversion, avec un procédé d'hydrocraquage dans lequel un flux est soutiré latéralement dans la colonne de fractionnement entre le plateau d'alimentation et le fond de la colonne. Au moins une partie dudit flux constitue le flux de recyclage. Ce flux peut éventuellement être strippé dans une colonne de stripage. La fraction légère obtenue après stripage est renvoyée à la colonne de fractionnement et la fraction lourde issue du stripage est recyclée à l'étape d'hydrocraquage.

La demande de brevet WO2012/052042 propose une autre solution, avec un procédé d'hydrocraquage dans lequel une partie du flux de fond de la colonne de fractionnement (résidu) est strippé dans une colonne de stripage. La fraction légère obtenue après stripage est renvoyée à la colonne de fractionnement, et la fraction lourde issue du stripage est au moins en partie purgée, l'autre partie de cette fraction pouvant être recyclée à la colonne de stripage.

Ces procédés ont apporté des améliorations dans la réduction des HPNA, mais souvent au détriment des rendements (et/ou des coûts de production ou d'équipements).

L'invention a alors pour but d'améliorer les procédés d'hydrocraquage, afin de diminuer la formation des composés aromatiques polycycliques et/ou d'éliminer ces composés. Elle cherche en outre à maintenir à un niveau identique ou proche le rendement de l'hydrocraquage en produits valorisables, et/ou à ne pas élever significativement les coûts de production ou d'équipement de l'unité d'hydrocraquage.

### Résumé de l'invention

L'invention a tout d'abord pour objet un procédé d'hydrocraquage d'une charge pétrolière comprenant au moins 10% volume de composés bouillant au-dessus de 340°C, comprenant :
- (a) au moins une étape d'hydrocraquage de la charge afin d'obtenir un effluent hydrocraqué;
- (b) une étape de séparation liquide/gaz de l'effluent hydrocraqué pour obtenir un effluent gazeux et un effluent liquide ;
- (c) une étape de fractionnement dudit effluent liquide, mise en oeuvre dans au moins une colonne, à une pression P1 en fond de colonne, notamment comprise entre 0,2 et 0,4 MPa, produisant au moins un premier distillat et un premier résidu,
- (d) une étape de recyclage d'une première partie dudit premier résidu vers l'étape d'hydrocraquage et/ou au moins une des étapes d'hydrocraquage,
- (e) une étape de rectification d'une deuxième partie du premier résidu obtenu à l'étape de fractionnement, mise en oeuvre dans au moins une colonne, à une pression P2 en tête inférieure à la pression P1 d'au moins 0,05 MPa, pour obtenir au moins un distillat secondaire, un résidu secondaire et un flux vapeur,
- (f) une étape de purge d'au moins une partie ou de la totalité du résidu secondaire,
- (g) une étape de recyclage de tout ou partie, notamment de la totalité, dudit distillat secondaire vers l'étape d'hydrocraquage ou vers au moins une des étapes d'hydrocraquage, après une éventuelle étape de séparation des gaz.

Le procédé selon l'invention a donc choisi d'une part de ne pas recycler de flux provenant de l'étape de rectification directement vers l'étape de fractionnement, mais vers l'étape d'hydrocraquage, c'est-à-dire vers une section réactionnelle dans lequel le flux sera transformé. D'autre part, le procédé selon l'invention a choisi de limiter/abaisser la pression dans l'étape de rectification par rapport à la pression de l'étape de fractionnement. Il s'est avéré qu'abaisser ainsi la pression en rectification améliorait très significativement l'efficacité de la séparation réalisée, et concentrait de fait les hydrocarbures aromatiques polycycliques dans le résidu secondaire (la fraction non convertie). Deux conséquences très avantageuses en découlent : D'une part, ce résidu secondaire plus concentré en HPNA peut être purgé, au moins en partie, voire en totalité, pour être éliminé, ce qui élimine du même coup une proportion plus importante de HPNA que dans les procédés d'hydrocraquage précédents. D'autre part, on peut renvoyer à l'hydrocraquage directement le distillat obtenu en rectification, puisqu'il contient moins/pas de HPNA susceptible de détériorer l'efficacité du catalyseur d'hydrocraquage, ce qui permet d'augmenter la conversion de la charge, d'améliorer donc le rendement d'hydrocraquage en produits valorisables et/ou d'augmenter la durée de cycle catalytique par rapport aux procédés d'hydrocraquage précédents.

L'invention a découvert qu'il était possible de modifier les conditions opératoires (ajout d'un système de refroidissement par exemple) de manière à récupérer la fraction valorisable dans le distillat secondaire, et donc à ne pas recycler la vapeur de tête (car elle ne contient plus de produits valorisables). C'est pour cette raison que la pression peut être abaissée dans la rectification, avec les effets bénéfiques soulignés plus haut.

On peut ainsi noter que c'est notamment parce qu'on abandonne le recyclage depuis l'étape de rectification vers l'étape de fractionnement (au profit d'un recyclage vers l'étape d'hydrocraquage) qu'on a pu se permettre d'abaisser la pression pendant la rectification. Les deux caractéristiques sont donc liées, combinées pour atteindre l'effet voulu sur les HPNA.

Il est aussi à souligner une autre conséquence avantageuse de l'invention : puisqu'on ne fait plus de recyclage de tout ou partie du distillat secondaire et/ou du résidu secondaire issus de la rectification vers le fractionnement, on peut réduire la taille des installations, notamment en diminuant le dimensionnement de la colonne de fractionnement, et en supprimant les équipements qui étaient nécessaires pour le recyclage depuis la colonne de rectification vers la colonne de fractionnement.

Il a été, par ailleurs, montré que l'invention était particulièrement efficace pour réduire la quantité présente en hydrocraquage de HPNA ayant spécifiquement au moins 6 cycles aromatiques, qui sont les plus réfractaires aux réactions mises en jeu lors de l'hydrocraquage, ce qui favorise tout particulièrement l'augmentation de la durée de cycle catalytique par rapport aux procédés antérieurs.

Comme vu plus haut, avantageusement, le procédé selon l'invention peut être dépourvu d'étape de recyclage vers l'étape de fractionnement (c) de tout ou partie du distillat secondaire et/ou de tout ou partie du résidu secondaire issus de l'étape de rectification (e), et/ou de tout ou partie du flux vapeur de tête issus de l'étape de rectification (e).

De préférence, la pression P2 en tête de colonne de l'étape de rectification est inférieure à la pression P1 en fond de colonne de l'étape de fractionnement (c) d'au moins 0,06 MPa, notamment d'au moins 0,08 MPa, de préférence d'au plus 400 kPa, soit 0,4 MPa. Il s'avère que plus l'écart de pression P1 - P2 est choisi élevé, plus la séparation est efficace et plus la teneur en HPNA augmente dans le résidu secondaire. Naturellement, l'écart doit rester raisonnable pour que l'abaissement de la pression P2 dans l'étape de rectification ne soit pas trop complexe/coûteuse à obtenir à l'échelle industrielle d'une unité d'hydrocraquage.

Deux variantes sont possibles dans le cadre de l'invention : soit on choisit la pression P2 à une valeur qui reste supérieure ou égale à la pression atmosphérique, soit on la choisit inférieure à la pression atmosphérique. Cette pression P2 est mesurée/choisie en tête de colonne. Dans le deuxième cas de figure, on choisit de préférence une pression P2 comprise entre 133 Pa (1 mm Hg) et 1,101 MPa, et de préférence entre 1333 Pa (10 mm Hg) et 0,08 MPa (600 mm Hg).

De préférence, l'étape de rectification (e) prévoit une colonne de distillation munie de plateau(x) d'alimentation, éventuellement de garnissage et de plateau(x) de soutirage, et :
- le premier résidu issu de l'étape de fractionnement (c), éventuellement au moins partiellement vaporisé, alimente ladite colonne sur au moins un plateau d'alimentation
- le distillat secondaire est soutiré de ladite colonne au niveau d'un plateau de soutirage,
- le résidu secondaire est soutiré en fond de ladite colonne,
- le flux vapeur, de tête, est refroidi, notamment par un reflux circulant ou par un système de condensation.

De préférence, l'étape de rectification est mise en oeuvre en utilisant un gaz de stripage, par exemple à base de vapeur d'eau ou d'hydrogène, injecté à un point d'injection dans la colonne qui est avantageusement situé en-dessous du plateau d'alimentation de la colonne.

Avec le procédé selon l'invention, le distillat secondaire obtenu à l'étape de rectification présente une concentration en HPNA inférieure ou égale à 500 ppm poids, préférentiellement inférieure ou égale à 350 ppm poids, et très préférentiellement inférieure ou égale à 200 ppm poids. On a donc un distillat secondaire très appauvri en HPNA, ce qui est le but de l'invention.

Ce distillat secondaire présente, avec le procédé de l'invention, le plus souvent une proportion d'au moins 70%poids en hydrocarbures non convertis, préférentiellement d'au moins 80%poids en hydrocarbures non convertis et très préférentiellement d'au moins 90%poids en hydrocarbures non convertis.

De préférence, l'étape de rectification (e) prévoit une colonne de distillation munie de plateau(x) d'alimentation, éventuellement de garnissage et de plateau(x) de soutirage, et ladite étape est mise en oeuvre avec un gaz de stripage, notamment sous forme de vapeur d'eau ou d'hydrogène, injecté de préférence en dessous du ou d'au moins un des plateaux d'alimentation de la colonne.

De préférence, dans l'étape de rectification (e), le premier résidu est alimenté à une température comprise entre 250 et 400°C.

La deuxième partie du premier résidu qui est traitée dans l'étape de rectification (e) correspond de préférence à au plus 50% poids du premier résidu obtenu dans l'étape de fractionnement (c), notamment à au plus 20% poids, de préférence à environ 10% poids dudit premier résidu. Ainsi, l'ajustement de la quantité de résidu traité permet de produire un résidu secondaire dont la quantité est suffisante pour assurer la purge de l'unité sans qu'il soit nécessaire d'en recycler une partie vers la section hydrocraquage.

A noter que, de préférence, le premier résidu n'est partagé qu'en deux parties, la première, qui est recyclée à l'étape d'hydrocraquage, et la deuxième partie, qui est traitée à l'étape de rectification. Au plus 50% poids de ce résidu traité en rectification signifie donc que le complément à 100%, donc qu'au moins 50% du résidu, est recyclé à l'hydrocraquage. On voit donc qu'un mode de réalisation préféré selon l'invention consiste à recycler majoritairement ce résidu.

Il est possible, quand on recycle la première partie du premier résidu vers l'hydrocraquage, d'opérer le recyclage direct, ou après une éventuelle étape optionnelle de séparation des gaz.

Dans l'étape de purge (f), on purge de préférence au moins 20% poids du résidu secondaire, notamment au moins 40% poids, et de préférence au moins 60% ou au moins 80% poids du résidu secondaire. Selon un mode de réalisation, c'est la totalité (100%) du résidu secondaire qui est purgé. La quantité de résidu secondaire qui n'est pas purgée est de préférence mélangée avec le distillat secondaire et envoyé vers l'étape d'hydrocraquage.

On a en effet montré que le résidu secondaire obtenu avec le procédé selon l'invention présente en général une concentration en HPNA supérieure à 1 000 ppm poids, préférentiellement supérieure à 1500 ppm poids et même supérieure à 2000 ppm poids : on vérifie qu'on a bien concentré les HPNA dans ce résidu, pour pouvoir plus facilement les éliminer du procédé, notamment par une purge partielle ou totale de ce résidu.

Selon l'invention, on préfère opérer l'étape de fractionnement et/ou l'étape de rectification avec un gaz de strippage, notamment sous forme de vapeur d'eau.

Le gaz de strippage de l'étape de fractionnement est de préférence injecté à une pression comprise entre 0,2 et 0,4 MPa.

Le gaz de strippage de l'étape de rectification est injecté de préférence à une pression comprise entre 0,001 et 0,35 MPa. Pour la rectification, le gaz de strippage peut être aussi de l'hydrogène plutôt que de la vapeur d'eau.

Le procédé selon l'invention prévoit une ou deux étapes d'hydrocraquage (a), comme cela est connu des procédés d'hydrocraquage. De préférence, l'étape d'hydrocraquage ou l'une au moins desdites étapes quand il y en a plusieurs, notamment deux, est précédée d'une étape (h) d'hydrotraitement. De façon connue, par hydrotraitement, on désigne l'ensemble des procédés d'épuration qui permettent d'éliminer, par action de l'hydrogène, les impuretés diverses contenues dans des charges hydrocarbonées. Les procédés d'hydrotraitement permettent d'éliminer, par action de l'hydrogène, des impuretés présentes dans les charges telles que l'azote (on parle alors d'hydrodéazotation), le soufre (on parle alors d'hydrodésulfuration), l'oxygène (on parle alors d'hydrodéoxygénation), et les composés contenant des métaux qui peuvent empoisonner le catalyseur et engendrer des problèmes opératoires en aval (on parle alors d'hydrodémétallation).II est ainsi fréquent que le procédé d'hydrotraitement soit de fait une étape préalable de traitement d'une charge par procédé de type hydroconversion/hydrocraquage.

Dans le cas où le procédé selon l'invention est un hydrocraquage en deux étapes, les conditions opératoires de chacune de ces deux étapes sont généralement les suivantes :
- une température supérieure à 200 °C, souvent comprise entre 250 et 480°C, avantageusement comprise entre 320 et 450°C, de préférence entre 330 et 435°C,
- sous une pression supérieure à 1 MPa, souvent comprise entre 2 et 25 MPa, de manière préférée entre 3 et 20 MPa,
- la vitesse spatiale est comprise entre 0,1 et 20h⁻¹ et de préférence comprise entre 0,1 et 6h⁻¹, de manière plus préférée comprise entre 0,2 et 3h⁻¹,
- la quantité d'hydrogène introduite est telle que le rapport volumique litre d'hydrogène / litre d'hydrocarbure soit compris entre 80 et 5000 NI/I et le plus souvent comprise entre 100 et 3000 NI/I.

L'invention a également pour objet toute installation d'hydrocraquage mettant en oeuvre le procédé selon l'invention.

L'invention a également pour objet une installation d'hydrocraquage d'une charge pétrolière comprenant au moins 10% volume de composés bouillant au-dessus de 340°C, comprenant successivement :
- (a) au moins une section d'hydrocraquage de la charge afin d'obtenir un effluent hydrocraqué;
- (b) au moins une section de séparation liquide/gaz de l'effluent hydrocraqué pour obtenir un effluent gazeux et un effluent liquide ;
- (c) une section de fractionnement dudit effluent liquide, comprenant au moins une colonne, à une pression P1 en fond de colonne comprise notamment entre 0,2 et 0,4 MPa, produisant au moins un premier distillat et un premier résidu,
- (d) une ligne de recyclage d'une première partie dudit premier résidu vers la ou l'une des sections d'hydrocraquage,
- (e) une section de rectification d'une deuxième partie du premier résidu obtenu dans la zone de fractionnement, comprenant au moins une colonne, à une pression P2 en tête inférieure à la pression P1 d'au moins 0,05 MPa, pour obtenir au moins un distillat secondaire, un résidu secondaire et un flux vapeur,
- (f) une section de purge d'au moins une partie ou de la totalité du résidu secondaire,
- (g) une ligne de recyclage de tout ou partie, notamment de la totalité, dudit distillat secondaire vers l'étape d'hydrocraquage ou au moins une des sections d'hydrocraquage, après une éventuelle section de séparation des gaz.

L'installation d'hydrocraquage selon l'invention est de préférence dépourvue de ligne de recyclage de tout ou partie du distillat secondaire et/ou de tout ou partie du résidu secondaire issus de la zone de rectification (e) vers la zone de fractionnement (c).

De préférence, la zone de rectification (e) est équipée de dispositifs de contrôle de pression, soit de type régulateur de pression si la pression P2 est supérieure à la pression atmosphérique, soit de type dispositif de mise sous vide si la pression P2 est inférieure à la pression atmosphérique, notamment une pompe à anneau liquide ou un système d'éjecteurs.

Selon un mode de réalisation, cette installation d'hydrocraquage peut comprendre
- une ou deux sections d'hydrocraquage munie(s) d'une ligne (1) d'entrée de la charge et d'une ligne d'entrée d'hydrogène,
- la section de fractionnement comprenant au moins une colonne de distillation munie de plateaux, ladite colonne produisant un premier distillat et un premier résidu,
- la section de rectification d'une deuxième partie du premier résidu, comprenant au moins une colonne de distillation munie de plateaux et/ou de garnissage, ladite colonne comprenant : - au moins une ligne d'entrée de la deuxième partie du premier résidu au moins partiellement vaporisé sur au moins un plateau d'alimentation, - au moins une ligne connectée à un système de régulation de pression ou de mise sous vide, - au moins une ligne pour le soutirage d'au moins le distillat secondaire au niveau d'un plateau de soutirage, - au moins une ligne de soutirage en fond de colonne dudit résidu secondaire,
- au moins une ligne optionnelle pour l'injection d'un gaz de stripage, le point d'injection étant situé en-dessous du plateau d'alimentation du flux,
- une ligne optionnelle pour le recyclage d'une partie dudit résidu secondaire issu de la section de fractionnement directement dans la ou une des sections d'hydrocraquage.

### Liste des figures

La figure 1 représente un schéma de principe d'un procédé d'hydrocraquage selon l'art antérieur.
La figure 2 représente un schéma de principe d'un procédé d'hydrocraquage selon un premier mode de réalisation de l'invention.
La figure 3 représente un schéma de principe d'un procédé d'hydrocraquage selon un deuxième mode de réalisation de l'invention.

L'ensemble de ces figures est très schématique, ne respecte pas nécessairement l'échelle ni la répartition spatiale des différents dispositifs représentés. Les références identiques d'une figure à l'autre correspondent aux mêmes composés/lignes/dispositifs.

### Description des modes de réalisation

Dans le présent texte, on définit la rectification par une distillation visant à purifier un produit en concentrant les composés indésirables dans l'une des fractions issues de la distillation.

Dans le présent texte, on définit les charges par leur point d'ébullition T5 (comme cela est expliqué plus loin). La conversion de la charge est définie par rapport au point de coupe du résidu primaire. La fraction non convertie est appelée résidu primaire. La fraction convertie comprend les fractions recherchées par le raffineur.

La partie purgée se réfère à une partie qui sort du procédé.

### Charges :

Des charges très variées peuvent être traitées par les procédés d'hydrocraquage. Généralement, elles contiennent au moins 10% volume, généralement au moins 20 % volume, et souvent au moins 80% volume de composés bouillant au-dessus de 340°C.

La charge peut être par exemple des LCO (acronyme du terme anglo-saxon « Light Cycle Oil » , qui sont des gazoles légers issus d'une unité de craquage catalytique), des distillats atmosphériques, des distillats sous vide par exemple des gazoles issus de la distillation directe du brut ou d'unités de conversion telles que le FCC (« Fluid Catalytic Cracking » en anglais, pour le craquage catalytique fluide), la cokéfaction (« coker » en anglais) ou la viscoréduction, ainsi que des charges provenant d'unités d'extraction d'aromatiques, des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées. La charge peut encore être une huile désasphaltée, des effluents d'une unité de Fisher-Tropsch ou encore tout mélange des charges précédemment citées. La liste ci-dessus n'est pas limitative.

En général, les charges ont un point d'ébullition T5 supérieur à 150°C (c'est-à-dire que 95 % des composés présents dans la charge ont un point d'ébullition supérieur à 150°C). Dans le cas de diesel, le point T5 est généralement d'environ 150°C. Dans le cas de VGO (gazole sous vide), le T5 est généralement supérieur à 340°C, voire supérieur à 370°C. Les charges utilisables sont donc dans une large gamme de points d'ébullition. Cette gamme s'étend généralement du diesel au VGO, en passant par tous les mélanges possibles avec d'autres charges, par exemple le LCO.

La teneur en azote des charges traitées dans les procédés d'hydrocraquage est usuellement supérieure à 500 ppm poids, généralement comprise entre 500 et 10000 ppm poids, de manière plus générale comprise entre 700 et 4500 ppm poids et de manière encore plus générale comprise entre 800 et 4500 ppm poids.

La teneur en soufre des charges traitées dans les procédés d'hydrocraquage est usuellement comprise entre 0,01 et 5% poids, de manière générale comprise entre 0,2 et 4% poids et de manière encore plus générale entre 0,5 et 3% poids. La charge peut éventuellement contenir des métaux. La teneur cumulée en nickel et vanadium des charges traitées dans les procédés d'hydrocraquage est de préférence inférieure à 10 ppm poids, de manière préférée inférieure à 5 ppm poids, et de manière encore plus préférée inférieure à 2 ppm poids. La teneur en asphaltènes est généralement inférieure à 3000 ppm poids, de manière préférée inférieure à 1000 ppm poids, de manière encore plus préférée inférieure à 300 ppm poids.

### Conditions opératoires :

Les conditions opératoires telles que température, pression, taux de recyclage d'hydrogène, vitesse spatiale horaire, sont variables en fonction de la nature de la charge, de la qualité des produits désirés et des installations dont dispose le raffineur. Le catalyseur d'hydrocraquage/hydroconversion ou hydrotraitement est généralement mis en contact, en présence d'hydrogène, avec les charges décrites précédemment :
- à une température supérieure à 200 °C, souvent comprise entre 250 et 480°C, avantageusement comprise entre 320 et 450°C, de préférence entre 330 et 435°C,
- sous une pression supérieure à 1 MPa, souvent comprise entre 2 et 25 MPa, de manière préférée entre 3 et 20 MPa,
- la vitesse spatiale est comprise entre 0,1 et 20h⁻¹ et de préférence comprise entre 0,1 et 6h¹, de manière plus préférée comprise entre 0,2 et 3h⁻¹,
- la quantité d'hydrogène introduite est telle que le rapport volumique litre d'hydrogène / litre d'hydrocarbure soit compris entre 80 et 5000 NI/I et le plus souvent comprise entre 100 et 3000 NI/I.

Ces conditions opératoires utilisées dans les procédés d'hydrocraquage permettent généralement d'atteindre des conversions par passe, en produits convertis (c'est-à-dire à points d'ébullition inférieurs au point de coupe résidu) supérieures à 15 %, et de manière encore plus préférée comprises entre 20 % et 95 %.

### Les unités d'hydrocraquage :

### Modes de mise en oeuvre :

Les procédés d'hydrocraquage/hydroconversion mettant en oeuvre les catalyseurs selon l'invention couvrent les domaines de pression et de conversion allant de l'hydrocraquage doux à l'hydrocraquage haute pression.

On entend par hydrocraquage doux, un hydrocraquage conduisant à des conversions modérées, généralement inférieures à 40 %, et fonctionnant à basse pression, généralement entre 2 MPa et 9 MPa.

Le catalyseur d'hydrocraquage peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur d'hydrocraquage.

L'hydrocraquage peut être opéré à haute pression (au moins 10 MPa).

L'hydrocraquage peut selon une première variante être opéré selon un schéma d'hydrocraquage dit en deux étapes avec séparation intermédiaire entre les deux zones réactionnelles, dans une étape donnée, le catalyseur d'hydrocraquage peut être utilisé dans l'un ou dans les deux réacteurs en association ou non avec un catalyseur d'hydroraffinage situé en amont du catalyseur d'hydrocraquage.

L'hydrocraquage peut être opéré selon une deuxième variante, dite en une étape. Cette variante comprend généralement en premier lieu un hydroraffinage poussé qui a pour but de réaliser une hydrodéazotation et une hydrodésulfuration poussées de la charge, avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de cette charge en fractions plus légères. La conversion, qui reste insuffisante, est complétée sur le catalyseur d'hydrocraquage plus actif.

La section d'hydrocraquage peut contenir un ou plusieurs lits de catalyseurs identiques ou différents. Lorsque les produits préférés sont les distillats moyens, on utilise des solides basiques amorphes, par exemple de l'alumine ou des silices-alumines ou des zéolithes basiques, éventuellement additionnées d'au moins un métal hydrogénant du groupe VIII et de préférence également additionnées d'au moins un métal du groupe VIB. Ces zéolithes basiques sont composées de silice, d'alumine, et d'un ou plusieurs cations échangeables tels que du sodium, du magnésium, du calcium ou des terres rares.

Lorsque l'essence est le produit majoritairement recherché, le catalyseur est généralement composé d'une zéolithe cristallisée sur laquelle on dépose de faibles quantités d'un métal du groupe VIII, et également de manière plus préférée d'un métal du groupe VIB.

Les zéolithes utilisables sont naturelles ou synthétiques, et peuvent être par exemple choisies parmi les zéolithes X, Y ou L, la faujasite, la mordénite, l'érionite ou la chabasite.

L'hydrocraquage peut être opéré dans un seul ou plusieurs réacteurs en lit bouillonnant, avec ou sans recyclage liquide de la fraction non convertie, éventuellement en association avec un catalyseur d'hydroraffinage situé dans un réacteur en lit fixe ou en lit bouillonnant en amont du catalyseur d'hydrocraquage. Le lit bouillonnant s'opère avec retrait de catalyseur usé et ajout journalier de catalyseur neuf afin de conserver une activité du catalyseur stable.

### Lits de garde :

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement. Les catalyseurs ou lits de dits de garde utilisés ont la forme de sphères (billes) ou d'extrudés. Toute autre forme peut être utilisée. Parmi les formes particulières possibles, de façon non limitative, on peut citer les cylindres creux, les anneaux creux, les anneaux de Raschig, les cylindres creux dentelés, les cylindres creux crénelés, les roues de charrettes dites pentaring, les cylindres à multiples trous, etc.

Ces catalyseurs peuvent avoir été imprégnés par une phase active ou non. De manière préférée, les catalyseurs sont imprégnés par une phase hydro-déshydrogénante. De manière très préférée, la phase CoMo ou NiMo est utilisée. Ces catalyseurs peuvent présenter de la macroporosité.

### Séparation liquide/gaz :

Le séparateur réalise la séparation du liquide et du gaz présents dans l'effluent sortant de l'unité d'hydrocraquage. Tout type de séparateur permettant cette séparation peut être utilisé, par exemple un ballon de flash, un stripper, voire une simple colonne à distiller.

De préférence, une série de ballons de séparation est mise en oeuvre à différents niveaux de pressions et température, de façon connue de l'homme du métier.

Avantageusement, dans la variante de l'invention à deux étapes d'hydrocraquage, une partie ou la totalité de la section séparation peut être commune aux deux sections d'hydrocraquage.

### Fractionnement :

La section de fractionnement est généralement constituée d'une ou plusieurs colonnes comprenant plusieurs plateaux et/ou garnissages internes. Ces colonnes sont habituellement strippées à la vapeur et comprennent éventuellement un ou plusieurs rebouilleurs afin de faciliter la vaporisation.

La section de fractionnement permet de séparer l'hydrogène sulfuré (H₂S) et les composant légers (méthane, éthane, propane, butane...) des effluents, ainsi que les coupes hydrocarbonées présentant des points d'ébullition dans le domaine des essences, du kérosène, du gasoil et une fraction lourde récupérée en fond de colonne appelée résidu.

Optionnellement, la section de fractionnement comprend une colonne de stripage mise en oeuvre sur la totalité ou sur une partie des flux issus de la section de séparation.

La section de fractionnement comprend au moins une colonne opérée avec une pression P1 en fond. De préférence, cette pression P1 est comprise entre 0,2 et 0,4 MPa.

### Rectification :

La section de rectification comprend généralement une ou plusieurs colonnes, de préférence une colonne, comprenant plusieurs plateaux et/ou garnissages internes.

Ces colonnes sont, de préférence, strippées à la vapeur et comprennent éventuellement au moins un rebouilleur afin de faciliter la vaporisation. Elle permet de séparer tout ou partie du résidu issu de la section de fractionnement en différentes coupes hydrocarbonées présentant des points d'ébullition dans le domaine du gasoil, du distillat sous vide et une fraction lourde récupérée en fond de colonne dont tout ou partie est purgée hors de l'unité.

La section de rectification comprend au moins une colonne opérée avec une pression P2 en tête. La pression P2 est inférieure ou égale à la pression P1 moins 0,05 MPa au minimum.

De préférence, ladite étape de rectification est constituée par une colonne de munie de plateaux et/ou de garnissage comportant au moins 5 étages théoriques. De préférence, ledit résidu au moins partiellement vaporisé alimente la colonne sur au moins un plateau d'alimentation, De préférence, ledit distillat secondaire est soutiré au niveau d'un plateau de soutirage situé de préférence au moins 2 étages théoriques au-dessus du point d'injection du résidu, De préférence, ledit résidu secondaire est soutiré en fond de colonne, situé de préférence au moins 2 étages théoriques au-dessous du point d'injection du résidu,

De préférence, la colonne est munie d'un système de refroidissement permettant d'assurer un reflux interne. Tout moyen connu de l'homme de l'art (condenseur, reflux circulant entre autres) peut être envisagé.

De préférence, la fraction vapeur de tête est évacuée au moyen d'un système de régulation de pression ou par un système de mise sous vide. Tout moyen connu de l'homme de l'art (système d'éjecteurs, pompe à anneau liquide en autres) peut être utilisé dans le cas d'une mise sous vide. Cette fraction n'est pas envoyée vers la section de fractionnement.

De préférence, la pression P2 de la section de rectification est inférieure à la pression P1 de la section de fractionnement d'au moins 0,06 MPa, plus préférentiellement d'au moins 0,08Mpa. La pression inférieure permet de maximiser la séparation et concentrer les HPNAs dans le résidu.

La pression P2 de la section de rectification peut être choisie supérieure ou égale à la pression atmosphérique, contrôlée par exemple, à l'aide d'un dispositif de régulation de pression, La pression P2 de la section de rectification peut alternativement être choisie inférieure à la pression atmosphérique, obtenue par exemple, à l'aide d'un dispositif de mise sous vide. De manière préférée, P2 est supérieure ou égale à 1 mm Hg (133 Pa) et de manière très préférée P2 est supérieure ou égale à 10 mm Hg (1333 Pa) et notamment d'au plus 0,08 MPa (600 mm Hg).

De préférence, l'étape de rectification est mise en oeuvre en utilisant un gaz de stripage, constituée par exemple de vapeur d'eau ou d'hydrogène, injecté à un point d'injection situé en-dessous du plateau d'alimentation.

### Description des figures

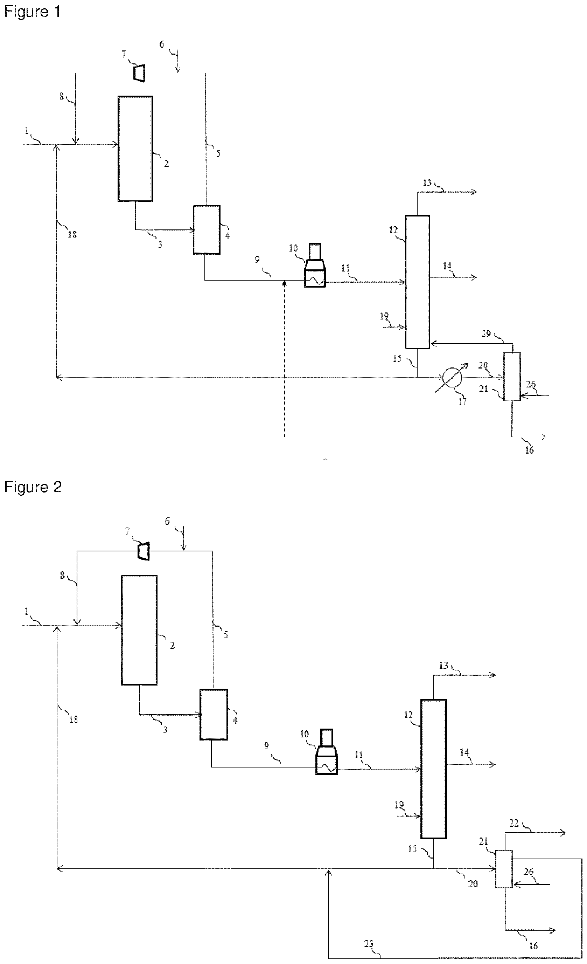

La figure 1 présente un schéma de procédé d'hydrocraquage selon l'art antérieur. La charge amenée par la ligne 1 est composée notamment d'hydrocarbures, et est mélangée à de l'hydrogène alimenté par les lignes 5 de recycle et/ou 6 d'hydrogène d'appoint via le compresseur 7 et la ligne 8. Le mélange charge/hydrogène ainsi réalisé est envoyé dans la section d'hydrocraquage 2. La section d'hydrocraquage est généralement précédée d'une section d'hydrotraitement (non représentée) comprenant un ou des lits catalytiques d'hydrotraitement, (ceux-ci pouvant également être inclus dans la section d'hydrocraquage).

Cette section d'hydrocraquage 2 comporte un ou plusieurs réacteurs en lit fixe ou en lit bouillonnant.

Lorsque la section d'hydrocraquage 2 comprend un ou plusieurs réacteurs en lit fixe, chaque réacteur peut comprendre un ou plusieurs lits de catalyseur réalisant l'hydrocraquage des hydrocarbures de la charge en hydrocarbures plus légers.

Lorsque la section d'hydrocraquage 2 comprend un ou plusieurs réacteurs en lit bouillonnant, un flux, comprenant du liquide du solide et du gaz, circule verticalement à travers un réacteur contenant un lit de catalyseur. Le catalyseur dans le lit est maintenu en mouvement aléatoire dans le liquide. Le volume brut du catalyseur dispersé à travers le liquide est donc supérieur au volume du catalyseur à l'arrêt. Cette technologie est décrite dans la littérature.

Un mélange de liquide hydrocarboné et d'hydrogène est passé à travers le lit de particules de catalyseur à une vitesse telle que les particules sont mises en mouvement aléatoire et donc en suspension dans le liquide. L'expansion du lit catalytique dans la phase liquide est contrôlée par le débit de liquide de recyclage, de façon à ce qu'à l'état d'équilibre, la majeure partie du catalyseur ne dépasse pas un niveau défini dans le réacteur. Les catalyseurs sont sous forme d'extrudés ou de billes, de préférence de diamètre compris entre 0,8 mm et 6,5 mm de diamètre.

Dans un procédé en lit bouillonnant, des quantités importantes de gaz d'hydrogène et de vapeurs d'hydrocarbures légers montent à travers la zone réactionnelle, puis dans une zone exempte de catalyseur. Le liquide provenant de la zone catalytique est, pour partie, recyclé dans le fond du réacteur après séparation d'une fraction gazeuse, et pour partie retiré du réacteur en tant que produit, le plus souvent en partie haute du réacteur.

Les réacteurs utilisés dans un procédé en lit bouillonnant sont généralement conçus avec un conduit de recyclage vertical central, qui sert de tube d'écoulement pour le recyclage de liquide de la zone exempte de catalyseur située au-dessus du catalyseur en lit bouillonnant, via une pompe de recyclage, qui permet de recycler le liquide dans la zone catalytique. Le recyclage de liquide permet à la fois de maintenir l'uniformité de la température dans le réacteur et de maintenir le lit de catalyseur en suspension.

L'effluent de la section d'hydrocraquage 2 est envoyé par ligne 3 vers une zone de séparation 4, permettant de récupérer, d'une part, une fraction gazeuse 5, et d'autre part une fraction liquide 9. La fraction gazeuse 5 contient l'hydrogène en excès qui n'a pas réagi dans la section réactionnelle d'hydrocraquage 2. Elle est généralement combinée avec de l'hydrogène frais arrivant par la ligne 6, afin d'être recyclée comme précisé plus haut.

La fraction liquide 9 est réchauffée par tout moyen 10, par exemple un four et/ou un échangeur (non représenté), afin d'être au moins en partie vaporisée, avant d'alimenter la section de fractionnement 12 via la ligne 11.

La section de fractionnement 12 comprend une ou plusieurs colonnes de distillation, équipées de plateaux et d'internes permettant de séparer différentes coupes (distillats) valorisables qui sont soutirées au moyen des lignes 13 et 14, plus éventuellement d'autres soutirages latéraux. Ces coupes présentent des gammes de points d'ébullition situés par exemple dans la gamme des essences, du kérosène et du gasoil. En fond de colonne, on récupère une fraction plus lourde non convertie (résidu) 15.

Une injection de gaz de stripage peut être prévue via la ligne 19. Cette ligne est située entre le plateau d'alimentation en effluent hydrocraqué ligne 11, et le point d'évacuation du résidu par la ligne 15.

Selon la figure 1, une partie du résidu 15 est recyclée vers la section d'hydrocraquage 2 par la ligne 18, une autre partie est chauffée dans un four ou un échangeur de chaleur 17, puis est envoyée vers la colonne de rectification 21, permettant de récupérer, d'une part, un distillat vapeur ligne 29, et d'autre part un résidu liquide par la ligne 16. Le distillat vapeur, par la ligne 29, est recyclé à la colonne de fractionnement 12. Le résidu est évacué hors de l'unité par la ligne 16, et constitue la purge. Cette purge 16 permet notamment d'éliminer au moins en partie les composés HPNA qui, sans cette purge, pourraient s'accumuler dans la boucle de recyclage. La ligne représentée en pointillés est optionnelle : il peut être prévu de renvoyer une partie seulement du résidu sortant de la colonne de rectification 21, le reste (ou la totalité en absence de cette ligne) étant purgé.

La figure 2 représente un premier mode de réalisation du procédé selon l'invention. On ne reprendra pas les éléments décrits précédemment qui sont communs avec la figure 1, et on s'attachera à décrire les différences d'avec le schéma de la figure 1.

Une partie du résidu 15 issu de la section de fractionnement 12 alimente la section de rectification 21 via la ligne 20. De préférence, le résidu 20 alimentant la section de rectification 21 est réchauffé par tout moyen, par exemple un four et/ou un échangeur (non représentés).

La section de rectification 21 comprend une colonne de distillation équipée de plateaux et/ou de garnissage ainsi que d'internes permettant de séparer différentes coupes : Un distillat secondaire est soutiré latéralement au moyen de la ligne 23, il peut y avoir éventuellement d'autres soutirages latéraux.

En tête de colonne, la fraction vapeur est envoyée par la ligne 22 vers un système de régulation de pression ou un système de mise sous vide (non représentés). En fond de colonne, on récupère une fraction plus lourde (résidu secondaire) enrichie en HPNA par rapport au résidu 15 issu de la section de fractionnement 12.

Dans une première variante, la pression de la colonne de rectification 21 est maintenue supérieure à la pression atmosphérique grâce à un dispositif de régulation de pression connu de l'homme de l'art.

Dans une seconde variante préférée, la pression de la colonne de rectification 21 est maintenue inférieure à la pression atmosphérique à l'aide d'un dispositif de mise sous vide. Tout dispositif de mise sous vide connu de l'homme de l'art peut être utilisé. Il peut s'agir notamment d'un dispositif composé d'éjecteurs à la vapeur, de pompes à anneau liquide et/ou d'éjecteurs hydrauliques. On utilise préférentiellement des éjecteurs à la vapeur et/ou de pompes à anneau liquide, et très préférentiellement des pompes à anneaux liquides.

Une injection de gaz de stripage peut être prévue via la ligne 26. Avantageusement, le gaz de stripage est de la vapeur, de préférence de la vapeur basse pression, notamment à une pression comprise entre 0,2 et 1,5 MPa. Le point d'injection est situé entre le plateau d'alimentation en résidu, dans lequel débouche la ligne 20, et le point d'évacuation du résidu secondaire débouche dans la ligne 16. Il est de préférence proche du point d'évacuation du résidu secondaire en fond de la colonne.

Le soutirage latéral, débouchant dans la ligne 23, est positionné au-dessus de la zone d'alimentation (ligne 20), de manière à ce que le flux soutiré présente une faible concentration en HPNA, inférieure à 500 ppm poids, préférentiellement inférieure à 350 ppm poids et très préférentiellement inférieure à 200 ppm poids, et, le plus souvent, une proportion importante de fraction non convertie dans la section d'hydrocraquage d'au moins 70 % poids en résidu, préférentiellement d'au moins 80 % poids en résidu et très préférentiellement d'au moins 90 % poids en résidu.

Tout ou partie dudit flux soutiré latéralement (par la ligne 23) est recyclé directement dans la section d'hydrocraquage 2. Selon l'invention, le résidu secondaire 16 n'est pas recyclé dans la section de rectification 21 ou dans la section de fractionnement 12. De préférence, il est entièrement purgé.

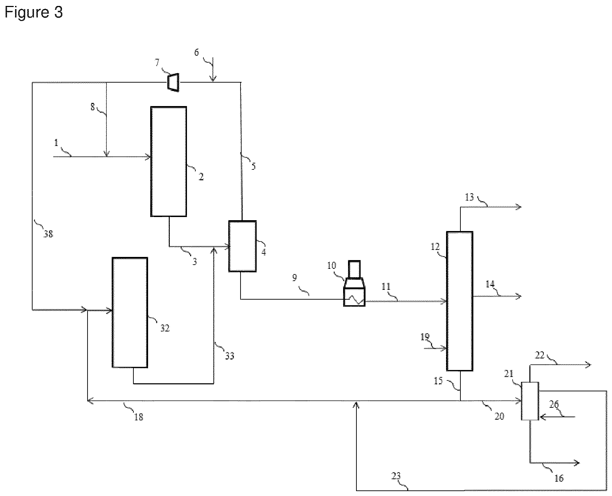

La figure 3 représente un deuxième mode de réalisation du procédé selon l'invention, concernant un hydrocraquage en deux étapes (et non pas en une étape comme représenté à la figure 2) : Ce mode de réalisation diffère du précédent par le fait que les hydrocarbures de la ligne 18 ne sont pas recyclés vers la section d'hydrocraquage 2. A la place, la ligne 18 est recyclée vers une autre (deuxième) section d'hydrocraquage 32. Cette deuxième section d'hydrocraquage 32 est alimentée en hydrogène via la ligne 38.

La deuxième section d'hydrocraquage 32 présente des caractéristiques similaires à celles décrites précédemment pour la (première) section d'hydrocraquage 2. L'effluent de la deuxième section d'hydrocraquage 32 est envoyé par la ligne 33 vers une section de séparation. De préférence, cette section de séparation est la section de séparation 4 qui reçoit également l'effluent 3 de la première section d'hydrocraquage 2.

### Exemples

### Exemple 1 (comparatif)

Cet exemple est basé sur la configuration de la figure 1. Les propriétés sont reportées dans le tableau 1 ci-après. Il est à noter que, compte-tenu de la configuration, les flux 15 et 18 ont exactement les mêmes propriétés.

Le fractionnement du flux 11 dans la colonne 12 a été simulé par programmation via le logiciel PRO/II version 10.2, commercialisé par la société Aveva, ainsi que la rectification du flux 20 dans la colonne 21. Les propriétés physiques et analytiques des flux résultants ont été simulées et confrontées aux propriétés physiques et analytiques des échantillons réels.

Les conditions opératoires des colonnes utilisées pour la simulation sont reportées dans le tableau 2 ci-après.

A partir des propriétés du flux 11 d'entrée de la colonne de fractionnement (voir tableau 1), la simulation PRO/II a pu établir les propriétés des flux 15, 18 et 16 ainsi que la répartition en HPNA a pu être modélisée.

Sur la base de ces résultats, les configurations de l'invention ont été simulées. Les résultats sont exposés ci-après dans le Tableau 1, qui indique les propriétés/compositions des flux selon le schéma de la figure 1 :

| Configuration | | Flux (Figure 1) | | | |
|---|---|---|---|---|---|
| Numéro de Flux | | 11 | 18 | 16 résidu secondaire | 29 |
| Rendement (2) | %pds | 185,4 | 99,7 | 1,0 | 1,0 |
| Quantité de diesel dans le flux | %pds | 41,8 | 3,9 | 0,00 | 5,2 |
| Quantité d'hydrocarbures dans le flux | %pds | 99,7 | 99,9 | 99,9 | 67,0 |
| Sp gr(1) - ASTM D4052 | | 0,837 | 0,849 | 0,850 | 0,847 |
| HPNA | | | | | |
| Coronéne | ppm pds | 307 | 560 | 987 | 141 |
| Dibenzo(e,ghi)péryléne | ppm pds | 84 | 155 | 156 | 153 |
| Naphtho[8.2.1 abc] coronéne | ppm pds | 118 | 215 | 382 | 51 |
| Ovaléne | ppm pds | 79 | 144 | 269 | 22 |
| Total HPNA | ppm pds | 588 | 1074 | 1 795 | 367 |
| | | | | | |
| Distillation - ASTM D7213, %pds | | | | | |
| Point d'ébullition Initial | °C | 88 | 336 | 416 | 326 |
| 1 0% | °C | 194 | 399 | 445 | 385 |
| 50% | °C | 397 | 465 | 496 | 430 |
| 90% | °C | 509 | 529 | 538 | 492 |
| Point d'ébullition final | °C | 590 | 590 | 590 | 537 |

| | | | | | |
|---|---|---|---|---|---|
| (1) : Densité relative (« specific gravity ») Sp Gr= péchantillon à 20°C /pH20 à 4°C où p est la densité exprimée en g/cm3, selon la norme ASTM D4052. (Même méthode de mesure pour tous les exemples) (2) : Rendement = Débit du flux / débit de charge de l'unité. (Même calcul du rendement pour tous les exemples) | | | | | |

Le tableau 2 ci-dessous précise les conditions opératoires de la colonne de fractionnement :

| *Conditions opératoires du fractionnement* | | *Figure 1* |
|---|---|---|
| Pression tête de colonne | MPa | 0,19 |
| Pression fond de colonne | MPa | 0,24 |
| Température Charge entrée | °C | 380 |
| Nombre de plateaux théoriques | | 38 |
| Débit de vapeur de stripage | kg de vapeur/tonne de fond | 50 |

Le Tableau 3 ci-dessous précise les conditions opératoires du stripeur de fond :

| *Conditions opératoires de la rectification* | | *Figure 1* |
|---|---|---|
| Pression tête de colonne | MPa | 0,24 |
| Pression fond de colonne | MPa | 0,25 |
| Température Charge entrée | °C | 380 |
| Température Tête sortie (flux 29) | °C | 368 |
| Nombre de plateaux théoriques | | 10 |
| Débit de vapeur strippant | kg de vapeur/tonne de fond | 500 |

Les exemples 2 et suivants illustrent l'invention avec le procédé de la figure 2, avec une section d'hydrocraquage.

### Exemple 2 (Invention)

Le tableau 4 ci-dessous donne les caractéristiques des courants 11, 16 et 18 selon la configuration de l'invention de la figure 2 issues de la simulation PRO/II. Les conditions opératoires des colonnes utilisées pour la simulation sont reportées dans les tableaux 5 et 6 :

| Configuration | | Flux de la Figure 2 | | | |
|---|---|---|---|---|---|
| Numéro de Flux | | 11 | 18 | 16 | 22 |
| Rendement | %pds | 192,2 | 106,9 | 0,4 | 0,01 |
| Quantité de diesel dans le flux | %pds | 41,4 | 4,5 | 0,00 | 0,01 |
| Quantité d'hydrocarbures dans le flux | %pds | 99,7 | 99,9 | 100,0 | 0,14 |
| Sp gr - ASTM D4052 | | 0,837 | 0,843 | 0,854 | 0,843 |
| HPNA | | | | | |
| Coronéne | ppm pds | 377 | 667 | 2 483 | 0 |
| Dibenzo(e,ghi)péryléne | ppm pds | 81 | 144 | 393 | 0 |
| Naphtho[8.2.1 abc] coronène | ppm pds | 89 | 156 | 962 | 0 |
| Ovaléne | ppm pds | 61 | 107 | 677 | 0 |
| Total HPNA | ppm pds | 607 | 1 074 | 4 514 | 0 |
| | | | | | |
| Distillation - ASTM D7213, %pds | | | | | |
| Point d'ébullition Initial | °C | 88 | 330 | 442 | 240 |
| 10% | °C | 195 | 397 | 478 | 294 |
| 50% | °C | 398 | 463 | 527 | 343 |
| 90% | °C | 509 | 529 | 556 | 394 |
| Point D'ébullition final | °C | 590 | 590 | 590 | 454 |

Le Tableau 5 ci-dessous précise les conditions opératoires de la colonne de fractionnement :

| *Conditions opératoires du fractionnement* | | *Figure 2* |
|---|---|---|
| Pression tête de colonne | MPa | 0,19 |
| Pression fond de colonne | MPa | 0,24 |
| Température Charge entrée | °C | 380 |
| Nombre de plateaux théoriques | | 38 |
| Débit de vapeur de stripage | kg de vapeur/tonne de fond | 50 |

Le tableau 6 précise les conditions opératoires de la colonne de rectification :

| *Conditions opératoires* de *la rectification* | | *Figure 2* |
|---|---|---|
| Pression haut de colonne | Pa (mm Hg) | 5 333 (40) |
| Pression bas de colonne | Pa (mm Hg) | 6 000 (45) |
| Température Charge entrée | °C | 357 |
| Température Tête sortie (flux 22) | °C | 100 |
| Nombre de plateaux théoriques | | 10 |
| Débit de vapeur strippant | kg de vapeur/tonne de fond | 500 |

Par rapport à la configuration de l'exemple 1 comparatif, cette configuration permet de mieux concentrer les HPNA dans la purge de l'unité : 4 514 ppm poids dans l'exemple 2, à comparer avec 1 795 ppm poids selon l'exemple 1 comparatif, soit une concentration deux fois et demi plus élevée. Cela permet, à même teneur en HPNA dans le flux recyclé à l'étape d'hydrocraquage, de diminuer le débit de purge de l'unité, et donc d'augmenter la conversion de l'unité de 99,0% à 99,6%. (La conversion est définie par le pourcentage de charge convertie en produit plus légers par rapport à la charge de l'unité).

Dans la configuration de l'art antérieur (exemple 1), la vapeur de la section de rectification (flux 29) est riche en hydrocarbures à hauteur de 67% poids (le reste étant de l'eau sous forme vapeur). A l'inverse, dans la configuration selon l'invention (exemple 2), la vapeur issue de la section de rectification (flux 22) ne contient que des traces d'hydrocarbures à hauteur de 0,14% poids, après traitement par un système de refroidissement. Dans la configuration selon l'invention (exemple 2), il n'est donc pas nécessaire de recycler la vapeur de tête de la zone de rectification vers la zone de fractionnement, pour éviter une perte en produits valorisables, contrairement à la configuration de l'art antérieur (exemple 1). La vapeur d'eau peut être récupérée, notamment dans le système de mise sous vide de la colonne de rectification.

### Exemple 3 (Invention)

Le tableau 7 ci-dessous donne les caractéristiques des courants 11, 16 et 18 selon une autre configuration de l'invention de la figure 2 issues de la simulation PRO/II. Les conditions opératoires des colonnes utilisées pour la simulation sont reportées dans les tableaux 8 et 9 ci-dessous :

| Configuration | | Flux de la Figure 2 | | | |
|---|---|---|---|---|---|
| Numéro de Flux | | 11 | 18 | 16 | 22 |
| Rendement | %pds | 185,4 | 99,7 | 1,0 | 0,01 |
| Quantité de diesel dans le flux | %pds | 41,8 | 4,3 | 0,00 | 0,01 |
| Quantité d'hydrocarbures dans le flux | %pds | 99,7 | 99,9 | 100,0 | 0,13 |
| Sp gr - ASTM D4052 | | 0,837 | 0,849 | 0,854 | 0,843 |
| HPNA | | | | | |
| Coronéne | ppm pds | 148 | 265 | 987 | 0 |
| Dibenzo(e,ghi)péryléne | ppm pds | 32 | 58 | 156 | 0 |
| Naphtho[8.2.1 abc] coronéne | ppm pds | 34 | 60 | 382 | 0 |
| Ovaléne | ppm pds | 24 | 41 | 269 | 0 |
| Total HPNA | ppm pds | 238 | 424 | 1 795 | 0 |
| | | | | | |
| Distillation - ASTM D7213, %pds | | | | | |
| Point d'ébullition Initial | °C | 88 | 331 | 404 | 238 |
| 10% | °C | 194 | 399 | 451 | 293 |
| 50% | °C | 397 | 465 | 503 | 342 |
| 90% | °C | 509 | 529 | 545 | 394 |
| Point D'ébullition final | °C | 590 | 590 | 590 | 456 |

Le tableau 8 précise les conditions opératoires de la colonne de fractionnement :

| *Conditions opératoires du fractionnement* | | *Figure 2* |
|---|---|---|
| Pression tête de colonne | MPa | 0,19 |
| Pression fond de colonne | MPa | 0,24 |
| Température Charge entrée | °C | 380 |
| Nombre de plateaux théoriques | | 38 |
| Débit de vapeur de stripage | kg de vapeur/tonne de fond | 50 |

Le tableau 9 précise les conditions opératoires de la colonne de rectification :

| *Conditions opératoires* de *la rectification* | | *Figure 2* |
|---|---|---|
| Pression tête de colonne | Pa (mm Hg) | 5 333 (40) |
| Pression fond de colonne | Pa (mm Hg) | 6 000 (45) |
| Température Charge entrée | °C | 358 |
| Nombre de plateaux théoriques | | 10 |
| Débit de vapeur strippant | kg de vapeur/tonne de fond | 500 |

Par rapport à la configuration de l'art antérieur (exemple 1), cette configuration (exemple 3) permet de réduire la concentration des HPNA dans le flux recyclé à l'étape d'hydrocraquage : 424 ppm poids (exemple 3) à comparer avec 1 074 ppm poids (exemple 1), soit une réduction par au moins un facteur 2,5. Cela permet, à même conversion, de diminuer la quantité de HPNA qui retourne à l'étape d'hydrocraquage, et donc de réduire l'empoisonnement du catalyseur par les HPNA, augmentant ainsi la durée de cycle du catalyseur.

Dans la configuration de l'art antérieur (exemple 1), la vapeur de la section de rectification (flux 29) est riche en hydrocarbures à hauteur de 67% poids. A l'inverse, dans la configuration selon l'invention (exemples 2 et 3), la vapeur issue de la section de rectification (flux 22) ne contient que des traces d'hydrocarbures à hauteur de 0,13% poids. Dans la configuration selon l'invention, il n'est donc pas nécessaire de recycler la vapeur de tête de la zone de rectification vers la zone de fractionnement pour éviter une perte en produits valorisables, contrairement à la configuration de l'art antérieur.

### Exemple 4 (Invention)

Le tableau 10 ci-dessous donne les caractéristiques des courants 11, 16 et 18 selon une autre configuration de l'invention de la figure 2, issues de la simulation PRO/II. Les conditions opératoires des colonnes utilisées pour la simulation sont reportées dans les tableaux 11 et 12.

| Configuration | | Flux de la Figure 2 | | | |
|---|---|---|---|---|---|
| Numéro de Flux | | 11 | 18 | 16 | 22 |
| Rendement | %pds | 185,4 | 99,7 | 1,0 | 0,01 |
| Quantité de diesel dans le flux | %pds | 41,8 | 4,3 | 0,1 | 0,00 |
| Quantité d'hydrocarbures dans le flux | %pds | 99,7 | 99,9 | 99,9 | 0,04 |
| Spa gr - ASTM D4052 | | 0,837 | 0,849 | 0,850 | 0,844 |
| HPNA | | | | | |
| Coronéne | ppm pds | 303 | 554 | 987 | 0 |
| Dibenzo(e,ghi)péryléne | ppm pds | 50 | 91 | 156 | 0 |
| Naphtho[8.2.1 abc]coronéne | ppm pds | 113 | 205 | 382 | 0 |
| Ovaléne | ppm pds | 79 | 145 | 269 | 0 |
| Total HPNA | ppm pds | 545 | 996 | 1 795 | 0 |
| | | | | | |
| Distillation - ASTM D7213, %pds | | | | | |
| Point d'ébullition Initial | °C | 88 | 331 | 390 | 209 |
| 10% | °C | 194 | 399 | 440 | 313 |
| 50% | °C | 397 | 465 | 494 | 361 |
| 90% | °C | 509 | 529 | 538 | 408 |
| Point D'ébullition final | °C | 590 | 590 | 590 | 463 |

Le tableau 11 précise les conditions opératoires de la colonne de fractionnement :

| *Conditions opératoires du fractionnement* | | *Figure 2* |
|---|---|---|
| Pression tête de colonne | MPa | 0,19 |
| Pression fond de colonne | MPa | 0,24 |
| Température Charge entrée | °C | 380 |
| Nombre de plateaux théoriques | | 38 |
| Débit de vapeur de stripage | kg de vapeur/tonne de fond | 50 |

Le tableau 12 précise les conditions opératoires de la colonne de rectification :

| *Conditions opératoires de la rectification* | | *Figure 2* |
|---|---|---|
| Pression tête de colonne | MPa | 0,189 |
| Pression fond de colonne | MPa | 0,20 |
| Température Charge entrée | °C | 380 |
| Nombre de plateaux théoriques | | 10 |
| Débit de vapeur strippant | kg de vapeur/tonne de fond | 500 |

Par rapport à la configuration de l'art antérieur, cette configuration permet de réduire la concentration des HPNA dans le flux recyclé à l'étape d'hydrocraquage : 996 ppm poids selon l'exemple 4 à comparer avec les 1 074 ppm poids de l'exemple 1, soit une réduction d'environ 8%). Cela permet, à même conversion, de diminuer la quantité de HPNA qui retourne à l'étape d'hydrocraquage, et donc de réduire l'empoisonnement du catalyseur par les HPNA, augmentant ainsi la durée de cycle du catalyseur.

On voit aussi que l'exemple 4 donne des résultats intéressants, cependant inférieurs à ceux obtenus aux exemples 2 et 3, de par le choix d'une pression P2 de rectification présentant un écart moins important avec la pression P1 de fractionnement.

Dans la configuration de l'art antérieur (exemple 1), la vapeur de la section de rectification (flux 29) est riche en hydrocarbures à hauteur de 67% poids. A l'inverse dans la configuration selon l'invention (exemple 4), la vapeur issue de la section de rectification (flux 22) ne contient que des traces d'hydrocarbures à hauteur de 0,04% poids. Dans la configuration selon l'invention, il n'est donc pas nécessaire de recycler la vapeur de tête de la zone de rectification vers la zone de fractionnement pour éviter une perte en produits valorisables, contrairement à la configuration de l'art antérieur (exemple 1).

Les exemples 2 à 4 se rapportent à un mode de réalisation de l'invention avec une unité utilisant une section d'hydrocraquage, comme représenté à la figure 2. L'invention apporte les mêmes avantages, ou des avantages similaires, vis-à-vis des HPNA quand elle est appliquée à une unité d'hydrocraquage avec deux sections d'hydrocraquage successives, comme représenté à la figure 3.

Dans les deux cas, l'invention est très flexible dans sa mise en oeuvre. Ainsi, elle peut offrir plusieurs choix possibles, notamment selon la quantité de résidu contenant les HPNA qui est purgée :
- privilégier l'augmentation du rendement, en gérant la même quantité de HPNA, mais en purgeant moins le résidu qui les contient,
- ou privilégier la durée de vie du catalyseur d'hydrocraquage, à iso-rendement, en purgeant davantage (voire la totalité) le résidu contenant les HPNA,
- ou tout choix intermédiaire entre les deux précédents.

## Revendications

1. Procédé d'hydrocraquage d'une charge pétrolière (1) comprenant au moins 10% volume de composés bouillant au-dessus de 340°C, comprenant :
- (a) au moins une étape d'hydrocraquage de la charge afin d'obtenir un effluent hydrocraqué;
- (b) une étape de séparation liquide/gaz de l'effluent hydrocraqué pour obtenir un effluent gazeux (5) et un effluent liquide (9)
- (c) une étape de fractionnement dudit effluent liquide (9), mise en oeuvre dans au moins une colonne (12), à une pression P1 en fond de colonne, notamment comprise entre 0,2 et 0,4 MPa, produisant au moins un premier distillat (13,14) et un premier résidu (15),
- (d) une étape de recyclage d'une première partie (18) dudit premier résidu (15) vers l'étape d'hydrocraquage et/ou au moins une des étapes d'hydrocraquage,
- (e) une étape de rectification d'une deuxième partie (20) du premier résidu (15) obtenu à l'étape de fractionnement, mise en oeuvre dans au moins une colonne (21), à une pression P2 en tête inférieure à la pression P1 d'au moins 0,05 MPa, pour obtenir au moins un distillat secondaire (23), un résidu secondaire (16) et un flux vapeur (22),
- (f) une étape de purge d'au moins une partie ou de la totalité du résidu secondaire (16),
- (g) une étape de recyclage de tout ou partie, notamment de la totalité, dudit distillat secondaire (23) vers l'étape d'hydrocraquage ou vers au moins une des étapes d'hydrocraquage, après une éventuelle étape de séparation des gaz.

2. Procédé selon la revendication précédente, **caractérisé en ce qu'**il est dépourvu d'étape de recyclage vers l'étape de fractionnement (c) de tout ou partie du distillat secondaire (23) et/ou de tout ou partie du résidu secondaire (16) et/ou de tout ou partie du flux vapeur de tête (22) issus de l'étape de rectification (e).

3. Procédé selon l'une des revendications précédentes, **caractérisé en ce que** la pression P2 en tête de colonne (21) de l'étape de rectification est inférieure à la pression P1 en fond de colonne de l'étape de fractionnement (c) d'au moins 0,06 MPa, notamment d'au moins 0,08 MPa, de préférence d'au plus 0,4 MPa.

4. Procédé selon l'une des revendications précédentes, **caractérisé en ce que** la pression P2 en tête de colonne (21) de l'étape de rectification (e) est inférieure à la pression atmosphérique, notamment comprise entre 133 Pa et 1,101 MPa, et de préférence entre 1333 Pa et 0,08 MPa.

5. Procédé selon l'une des revendications précédentes, **caractérisé en ce que** l'étape de rectification (e) prévoit une colonne de distillation (21) munie de plateau(x) d'alimentation, éventuellement de garnissage et de plateau(x) de soutirage, et **en ce que** :
- le premier résidu (15) issu de l'étape de fractionnement (c), éventuellement au moins partiellement vaporisé, alimente ladite colonne (21) sur au moins un plateau d'alimentation
- le distillat secondaire (23) est soutiré de ladite colonne (21) au niveau d'un plateau de soutirage,
- le résidu secondaire (16) est soutiré en fond de ladite colonne,
- le flux vapeur (22), de tête, est refroidi, notamment par un reflux circulant ou par un système de condensation.

6. Procédé selon l'une des revendications précédentes, **caractérisé en ce que** l'étape de rectification (e) prévoit une colonne de distillation (21) munie de plateau(x) d'alimentation, éventuellement de garnissage et de plateau(x) de soutirage, et **en ce que** ladite étape est mise en oeuvre avec un gaz de strippage, notamment sous forme de vapeur d'eau ou d'hydrogène, injecté de préférence en dessous du ou d'au moins un des plateaux d'alimentation de la colonne.

7. Procédé selon l'une des revendications précédentes, **caractérisé en ce que**, dans l'étape de rectification (e), le premier résidu (15) est alimenté à une température comprise entre 250 et 400°C.

8. Procédé selon l'une des revendications précédentes, **caractérisé en ce que** la deuxième partie (20) du premier résidu (15) qui est traitée dans l'étape de rectification (e) correspond à au plus 50% poids du premier résidu obtenu dans l'étape de fractionnement (c), notamment à au plus 20% poids, de préférence à environ 10% poids dudit premier résidu.

9. Procédé selon l'une des revendications précédentes, **caractérisé en ce que** dans l'étape de purge (f), on purge au moins 20% poids du résidu secondaire (16), notamment au moins 40% poids, et de préférence au moins 60% poids du résidu secondaire.

10. Procédé selon l'une des revendications précédentes, **caractérisé en ce qu'**on opère l'étape de fractionnement et/ou l'étape de rectification avec un gaz de strippage, notamment sous forme de vapeur d'eau.

11. Procédé selon la revendication précédente, **caractérisé en ce que** le gaz de strippage de l'étape de fractionnement est injecté à une pression comprise entre 0,2 et 0,4 MPa, et/ou **en ce que** le gaz de strippage de l'étape de rectification est injecté à une pression comprise entre 0,001 et 0,35 MPa.

12. Procédé selon l'une des revendications précédentes, **caractérisé en ce qu'**il prévoit une ou deux étapes d'hydrocraquage (a), une au moins desdites étapes étant précédée d'une étape (h) d'hydrotraitement.

13. Installation d'hydrocraquage d'une charge pétrolière comprenant au moins 10% volume de composés bouillant au-dessus de 340°C, comprenant successivement :
- (a) au moins une section d'hydrocraquage (2) de la charge (1) afin d'obtenir un effluent hydrocraqué,
- (b) au moins une section (4) de séparation liquide/gaz de l'effluent hydrocraqué pour obtenir un effluent gazeux (5) et un effluent liquide (9),
- (c) une section de fractionnement dudit effluent liquide, comprenant au moins une colonne (12), à une pression P1 en fond de colonne comprise notamment entre 0,2 et 0,4 MPa, produisant au moins un premier distillat (13,14) et un premier résidu (15),
- (d) une ligne de recyclage d'une première partie (18) dudit premier résidu (15) vers la ou l'une des sections d'hydrocraquage (2),
- (e) une section de rectification d'une deuxième partie (20) du premier résidu (15) obtenu dans la zone de fractionnement, comprenant au moins une colonne (21), à une pression P2 en tête inférieure à la pression P1 d'au moins 0,05 MPa, pour obtenir au moins un distillat secondaire (23), un résidu secondaire (16) et un flux vapeur (22),
- (f) une section de purge d'au moins une partie, ou de la totalité, du résidu secondaire (16),
- (g) une ligne de recyclage de tout ou partie, notamment de la totalité, dudit distillat secondaire (23) vers la section d'hydrocraquage (2) ou au moins une des étapes d'hydrocraquage, après une éventuelle section de séparation des gaz.

14. Installation d'hydrocraquage selon la revendication précédente, **caractérisé en ce qu'**elle est dépourvue de ligne de recyclage de tout ou partie du distillat secondaire (23) et/ou de tout ou partie du résidu secondaire (16) issus de la zone de rectification (e) vers la zone de fractionnement (c).

15. Installation d'hydrocraquage selon l'une des revendications 13 ou 14, **caractérisée en ce que** la zone de rectification (e) est équipée de dispositifs de contrôle de pression, soit de type régulateur de pression si la pression P2 est supérieure à la pression atmosphérique, soit de type dispositif de mise sous vide si la pression P2 est inférieure à la pression atmosphérique, notamment une pompe à anneau liquide ou un système d'éjecteurs.

16. Installation d'hydrocraquage selon l'une des revendications 13 à 15, **caractérisée en ce qu'**elle comprend
- une ou deux sections d'hydrocraquage (2) munie(s) d'une ligne (1) d'entrée de la charge et d'une ligne (8) d'entrée d'hydrogène,
- la section de fractionnement (12) comprenant au moins une colonne de distillation munie de plateaux, ladite colonne produisant un premier distillat et un premier résidu (15),
- la section de rectification d'une deuxième (20) partie du premier résidu (15), comprenant au moins une colonne de distillation (21) munie de plateaux et/ou de garnissage, ladite colonne comprenant : - au moins une ligne (20) d'entrée de la deuxième partie du premier résidu au moins partiellement vaporisé sur au moins un plateau d'alimentation, - au moins une ligne (22) connectée à un système de régulation de pression ou de mise sous vide, - au moins une ligne (23) pour le soutirage d'au moins le distillat secondaire au niveau d'un plateau de soutirage, - au moins une ligne (16) de soutirage en fond de colonne dudit résidu secondaire,
- au moins une ligne (26) optionnelle pour l'injection d'un gaz de stripage, le point d'injection étant situé en-dessous du plateau d'alimentation du flux (20)
- une ligne (18) optionnelle pour le recyclage d'une partie dudit résidu secondaire issu de la section de fractionnement directement dans la ou une des sections d'hydrocraquage.
